(19) Europäisches Patentamt / European Patent Office / Office européen des brevets

(11) **EP 3 811 093 B1**

(12) **FASCICULE DE BREVET EUROPEEN**

(45) Date de publication et mention de la délivrance du brevet:
**13.03.2024 Bulletin 2024/11**

(21) Numéro de dépôt: **19729800.3**

(22) Date de dépôt: **17.06.2019**

(51) Classification Internationale des Brevets (IPC):
*G06F 30/337* (2020.01)    *G06F 30/34* (2020.01)
*G06F 119/10* (2020.01)    *G01R 31/3181* (2006.01)
*G01R 31/3185* (2006.01)    *G01R 31/28* (2006.01)

(52) Classification Coopérative des Brevets (CPC):
**G01R 31/2881; G01R 31/31816; G06F 30/337; G06F 30/34;** G01R 31/318519; G06F 2119/10

(86) Numéro de dépôt international:
**PCT/EP2019/065919**

(87) Numéro de publication internationale:
**WO 2019/243278 (26.12.2019 Gazette 2019/52)**

(54) **PROCÉDÉ DE PRODUCTION D'UN CIRCUIT OPTIMISÉ POUR ÊTRE PROTÉGÉ CONTRE DES RADIATIONS**

VERFAHREN ZUR HERSTELLUNG EINER FÜR STRAHLUNGSSCHUTZ OPTIMIERTEN SCHALTUNG

METHOD FOR PRODUCING A CIRCUIT WHICH IS OPTIMISED FOR PROTECTION AGAINST RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2018 FR 1855484**

(43) Date de publication de la demande:
**28.04.2021 Bulletin 2021/17**

(73) Titulaire: **Safran Electronics & Defense**
**75015 Paris (FR)**

(72) Inventeurs:
- **AUTIE, Cédric**
  **77550 MOISSY-CRAMAYEL (FR)**
- **PORTEBOEUF, Thibault**
  **77550 MOISSY-CRAMAYEL (FR)**

(74) Mandataire: **Cabinet Boettcher**
**5, rue de Vienne**
**75008 Paris (FR)**

(56) Documents cités:
**US-A1- 2012 180 005**    **US-A1- 2015 363 517**
**US-B1- 9 054 684**

- **BALOCH S ET AL: "Design of a Novel Soft Error Mitigation Technique for Reconfigurable Architectures", 2006 IEEE AEROSPACE CONFERENCE; BIG SKY, MONTANA; MARCH 4 - 11, 2006, IEEE OPERATIONS CENTER, PISCATAWAY, NJ, 4 mars 2006 (2006-03-04), pages 1-9, XP010928636, ISBN: 978-0-7803-9545-9**

**Description**

L'invention concerne le domaine des procédés de production d'un circuit optimisé pour être protégé contre des radiations.

ARRIERE PLAN DE L'INVENTION

Dans l'espace, un FPGA (pour *Field-Programmable Gate Array*) est soumis à un environnement radiatif spatial résultant de plusieurs phénomènes parmi lesquels on trouve le rayonnement cosmique, les éruptions solaires et le vent solaire.

De même, dans l'atmosphère, un FPGA est soumis à un environnement radiatif atmosphérique résultant notamment de l'interaction du rayonnement cosmique avec les atomes de l'atmosphère.

Un tel FPGA est donc exposé, par exemple, à des ions lourds, des neutrons, des protons et des photons résultant de radiations naturelles.

Dans l'espace ou dans l'atmosphère, un FPGA peut par ailleurs être soumis à des radiations artificielles.

Il est possible que ces particules ou ces photons perturbent le FPGA et, notamment, produisent des *Single Event Upsets* (SEUs) sur les éléments mémoire du FPGA. Ces éléments mémoire peuvent être de différente nature, par exemple des bascules *flip-flop*, des bascules *latch* ou des points mémoire RAM. Les valeurs binaires des données précédemment échantillonnées par les éléments mémoires sont alors inversées. Un exemple d'art antérieur abordant les perturbations liées aux SEUs dans les circuits logiques est présenté dans le document US 2012/180005 A1.

Les particules et photons provenant des radiations naturelles ou artificielles tendent donc à réduire la robustesse du FPGA et donc de l'équipement électrique dans lequel est intégré le FPGA. L'équipement électrique est par exemple une Unité de Mesure Inertielle d'un lanceur spatial.

Un moyen existant pour corriger ce type de perturbation consiste à tripliquer les bascules sensibles, et à associer aux trois bascules tripliquées un voteur majoritaire. On corrige les sorties des bascules à partir du résultat du vote réalisé par le voteur. On parle alors de *Local Triple Modular Redundancy*, ou de redondance triple modulaire locale. Ce mécanisme fonctionne très bien à condition qu'une seule bascule sur les trois bascules soit en erreur. On appelle dans la suite de ce document « cellule TMR » une cellule de redondance triple modulaire comprenant un ensemble de trois bascules tripliquées et d'un voteur.

Cependant, il est possible qu'une même particule touche deux bascules d'une même cellule TMR et donc corrompe son fonctionnement. On parle ici de *Multiple Bit Upsets* (MBU).

Il est donc relativement complexe de garantir la conformité d'un FPGA (et donc d'un équipement électrique intégrant le FPGA) à une exigence de tenue à des radiations naturelles ou artificielles ou, au contraire, à une exigence de non-tenue à des radiations naturelles ou artificielles. Garantir la conformité à une exigence de non-tenue aux radiations présente un intérêt dans le cas d'un équipement électrique conçu spécialement pour un environnement non radiatif : on évite ainsi un détournement d'usage dudit équipement électrique.

Pour garantir la conformité d'un FPGA à ce type d'exigence, on a tenté de caractériser l'impact de radiations sur les éléments sensibles aux radiations du FPGA (tels que les bascules précédemment évoquées).

Pour caractériser l'impact des radiations sur le FPGA ou sur l'équipement électrique dans lequel est intégré le FPGA, il est connu de réaliser des simulations du FPGA ou de l'équipement électrique à partir notamment de modèles géométriques physiques du FPGA ou de l'équipement électrique.

A partir d'un modèle en trois dimensions et de la composition des matériaux utilisés pour fabriquer le FPGA, une méthode de Monte-Carlo est utilisée pour simuler statistiquement le passage d'un grand nombre de particules. Pour chaque trajectoire modélisée, les effets physiques sur le FPGA sont également simulés. Une connaissance approfondie des processus physiques sous-jacents peut permettre d'estimer les trajectoires provoquant des erreurs et de remonter à la géométrie de l'impact des radiations sur les éléments sensibles.

Ces simulations font appel à des modèles extrêmement complexes et à des temps de simulation très longs pour un résultat coûteux et difficile à obtenir, à exploiter et à confirmer expérimentalement. Par ailleurs, ces simulations requièrent des informations techniques précises sur le FPGA, qui sont rarement accessibles.

OBJET DE L'INVENTION

L'invention a pour objet d'améliorer la robustesse d'un circuit contre des radiations naturelles ou artificielles, et d'être en mesure de garantir cette robustesse.

RESUME DE L'INVENTION

En vue de la réalisation de ce but, on propose un procédé de production d'un circuit optimisé pour être protégé contre des radiations, le procédé de production comportant une phase de caractérisation préliminaire mise en œuvre sur un circuit de référence qui comprend au moins une surface de référence sur laquelle sont répartis des éléments de référence sensibles aux radiations, la phase de caractérisation préliminaire comprenant les étapes de :

- irradier à plusieurs reprises le circuit de référence ;
- après chaque irradiation, si un ou plusieurs éléments de référence du circuit de référence sont défaillants, localiser ledit ou lesdits éléments de référence ;
- cartographier un impact des irradiations sur la surface de référence du circuit de référence ;

le procédé de production comportant de plus une phase d'optimisation comprenant l'étape d'adapter une position sur au moins une surface optimisée du circuit optimisé d'au moins un élément optimisé sensible aux radiations en fonction de la cartographie mise en œuvre sur le circuit de référence.

Les irradiations et la cartographie mises en œuvre sur le circuit de référence permettent de caractériser précisément l'impact des radiations sur les éléments de référence du circuit de référence, mais aussi sur tout circuit présentant des caractéristiques proches du circuit de référence. Par exemple, l'ensemble des circuits appartenant à la même famille de composants que le circuit de référence, c'est-à-dire les composants du même concepteur basés sur la même technologie de fabrication ASIC et les mêmes choix d'architectures, pourront se voir appliquer directement les résultats obtenus. On peut citer pour exemple et sans que cela soit limitatif les composants FPGAs d'une même famille, c'est-à-dire basés sur la même architecture et le même procédé de fabrication, mais ayant par exemple des tailles de matrice différentes. On peut également citer les composants CPU ou SoC basés sur la même architecture et le même procédé de fabrication. Enfin, on peut également citer des circuits ASIC propriétaires basés sur une même bibliothèque de cellules standards et une même technologie de fabrication.

On adapte donc la position d'éléments optimisés du circuit optimisé à partir des résultats de la cartographie pour améliorer la robustesse des fonctions que les éléments optimisés mettent en oeuvre.

On améliore donc la robustesse du circuit optimisé et, comme la phase de caractérisation préliminaire est réalisée sur un circuit de référence dont les caractéristiques réelles sont semblables à celles du circuit optimisé, on est capable de garantir cette robustesse. Garantir la robustesse est particulièrement avantageux pour des circuits optimisés montés dans des équipements électriques susceptibles de subir des activités de certification (comme c'est le cas dans les applications aéronautiques et spatiales).

On propose aussi un circuit optimisé produit via le procédé de production qui vient d'être décrit.

On propose de plus une carte électrique comportant un circuit optimisé tel que celui qui vient d'être décrit.

On propose en outre une Unité de Mesure Inertielle comportant une carte électrique telle que celle qui vient d'être évoquée ainsi qu'un système de navigation comprenant cette Unité de Mesure Inertielle.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

- la figure 1 représente des groupes logiques (ou *clusters*) d'un FPGA ;
- les figures 2 à 5 représentent des exemples de registres de référence défaillants d'un FPGA de référence ;
- les figures 6 à 9 représentent des exemples de répartitions de probabilités de défaillance simultanée entre un registre de référence particulier et d'autres registres de référence situés à proximité ;
- les figures 10 à 13 représentent des formes géométriques incluant des groupes de défaillance, et des registres optimisés d'un FPGA optimisé coopérant pour mettre en oeuvre une même fonction.

DESCRIPTION DETAILLEE DE L'INVENTION

Le procédé de production selon l'invention est ici destiné à produire un circuit optimisé pour être protégé contre des radiations naturelles et artificielles.

Le circuit optimisé est ici un FPGA de la famille *IGLOO2* fabriqué par le fabricant de composants *Microsemi*. Le choix de ce composant permet d'illustrer ici l'invention sans toutefois en restreindre la portée à d'autres composants logiques FPGA, CPLD, ASIC, etc. En particulier, l'invention est également applicable aux autres FPGAs, incluant notamment, mais ne se limitant pas, aux composants de Xilinx, Intel/Altera, Microsemi, Lattice. De même, l'invention est également applicable aux circuits utilisant d'autres finesses de gravure ou conçus selon d'autres procédés de fonderies que l'IGLOO2.

Le FPGA *IGLOO2* est fabriqué avec une finesse de gravure de 65nm. L'outil utilisé pour le placement routage du FPGA est un outil de placement routage de la famille *Libero*.

La couche logique du FPGA, formée sur silicium, présente une surface optimisée qui est divisée en de nombreuses zones. Chaque zone est ici définie comme comportant un groupe logique (ou *cluster*). Chaque groupe logique comprend ici douze bascules *flip-flop*, douze tables de correspondance (ou LUT, pour *Look-Up Table*) et douze *buffers*.

La couche logique du FPGA comprend aussi des ressources de routage, parmi lesquelles on trouve des ressources de routage de signaux globaux. Les signaux globaux comprennent ici des signaux d'horloge et des signaux de *reset*.

Les ressources de routage de signaux globaux comprennent des *buffers* globaux (*Global Buffer*) et des *buffers* globaux de rangée (ou *Row Global Buffer*).

Les *buffers* globaux sont ici au nombre de 8 (leur nombre dépend de la taille du FPGA, certains FPGAs de la même famille en ont 16). Chaque *buffer* global est un multiplexeur qui génère un signal global indépendant. Il peut être piloté à partir de plusieurs sources, par exemple depuis une horloge externe ou un signal logique interne.

Les *buffers* globaux de rangée sont situés sur deux bandeaux verticaux à l'intérieur du FPGA. Chaque *buffer* global de rangée pilote les groupes logiques situés sur une branche de gauche et une branche de droite du *buffer* global de rangée.

Au moment du routage du FPGA, les signaux globaux provenant des *buffers* globaux sont routés vers les *buffers* globaux de rangée. Les signaux globaux atteignent alors les groupes logiques par l'intermédiaire de signaux globaux de rangée issus des *buffers* globaux de rangée.

Chaque *buffer* global a accès à tous les *buffers* globaux de rangée. Chaque *buffer* global de rangée est indépendant et peut aussi être piloté par des signaux logiques internes.

Les groupes logiques peuvent par ailleurs être pilotés par des signaux logiques internes dits « inter *clusters* », qui ne sont pas des signaux globaux.

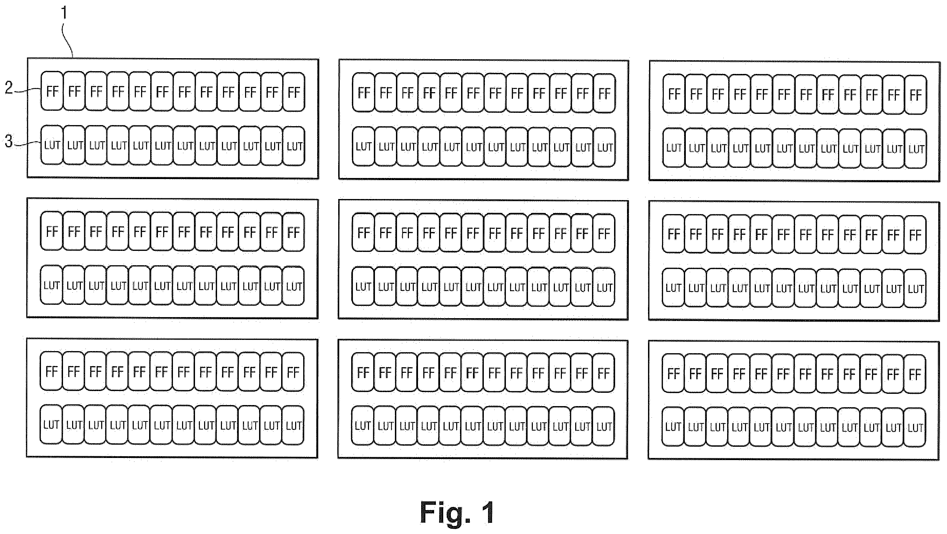

Ainsi, sur la figure 1, on peut voir neuf groupes logiques 1 (ou *clusters*), chaque groupe logique 1 contenant douze bascules *flip-flop* 2, douze tables de correspondance 3 (LUT) et douze *buffers* (non représentés). Cette représentation est purement fonctionnelle, les positions physiques et la taille de chacun de ces éléments étant inconnus, de même que l'espacement entre les différents éléments.

La structure du composant décrite ci-dessus permet d'illustrer une architecture classique de composant FPGA. D'autres composants FPGAs peuvent se baser sur des architectures différentes, avec des groupements d'éléments logiques et de bascules de géométrie, de taille et d'organisations différents. On retrouvera néanmoins une pluralité d'éléments mémoire couplés à une pluralité d'éléments logiques. L'invention s'attache à caractériser puis à optimiser l'utilisation de la pluralité d'éléments présents dans le FPGA.

Le procédé de production selon l'invention comprend tout d'abord une phase de caractérisation préliminaire qui est mise en œuvre sur un FPGA de référence. On pourrait aussi appeler « véhicule de test » le FPGA de référence.

Le FPGA de référence est ici un FPGA de la famille *IGLOO2*, semblable au FPGA optimisé que l'on veut produire.

Le FPGA de référence présente une surface de référence comportant une matrice comprenant des éléments de référence sensibles aux radiations, qui sont répartis sur une majorité de la surface de référence du FPGA de référence. Les éléments de référence doivent si possible être placés à des distances faibles les uns des autres (c'est-à-dire que le placement doit être le plus dense possible) afin d'assurer une meilleure précision de la caractérisation.

Chaque élément de référence est ici un registre de référence formé par une bascule *flip-flop* 2.

Le FPGA de référence comporte de plus une interface de communication permettant de remplir chaque registre de référence avec une donnée, et de lire la donnée contenue dans chaque registre de référence.

Cette interface de communication peut être une interface de type série à faible débit, ou bien une interface plus rapide. L'interface de communication permet une relecture de l'état des registres de référence de manière déterministe afin de permettre d'associer des erreurs constatées à des positions de registres de référence.

La phase de caractérisation préliminaire comporte tout d'abord l'étape de remplir (c'est à dire de pré-charger) chaque registre de référence du FPGA de référence avec une donnée connue.

Puis, la phase de caractérisation préliminaire consiste à irradier à plusieurs reprises le FPGA de référence. Les irradiations sont par exemple réalisées en utilisant un accélérateur de particules. Le FPGA de référence est ainsi soumis, pendant une durée prédéterminée, à des radiations susceptibles de provoquer des défaillances des registres de référence. Les radiations sont par exemple des radiations de protons, de neutrons, d'ions lourds, de photons, ou bien consistent à générer des rayonnements laser, des rayonnements électromagnétiques, etc.

Après chaque irradiation, on lit, grâce à l'interface de communication décrite plus tôt, les données contenues dans les registres de référence. On identifie alors les registres défaillants à cause des irradiations, c'est à dire les registres de référence qui contiennent, suite à une irradiation, une donnée différente de la donnée connue.

Chaque erreur est associée à un registre de référence défaillant et à la position du registre de référence défaillant sur la surface de référence du FPGA de référence.

On répète ces opérations de pré-chargement des registres, d'irradiation puis de lecture un grand nombre de fois, jusqu'à posséder des informations statistiques suffisantes. Typiquement, ces opérations d'irradiation puis de lecture sont répétées environ mille fois.

Grâce à ces informations statistiques, on cartographie l'impact des irradiations sur la surface de référence du FPGA de référence.

La cartographie permet d'identifier des relations de dépendance de défaillance entre des registres de référence qui sont souvent défaillants simultanément (en réponse à une même irradiation).

On définit ainsi au moins un « groupe de défaillance », comprenant une pluralité de registres de référence, de la manière suivante : le groupe de défaillance est tel que la probabilité de défaillance simultanée d'au moins deux registres de référence du groupe de défaillance est supérieure à un seuil prédéterminé.

On définit alors des formes géométriques qui incluent chacune des registres de référence formant un groupe de défaillance. Les formes géométriques sont donc représentatives de l'impact des irradiations.

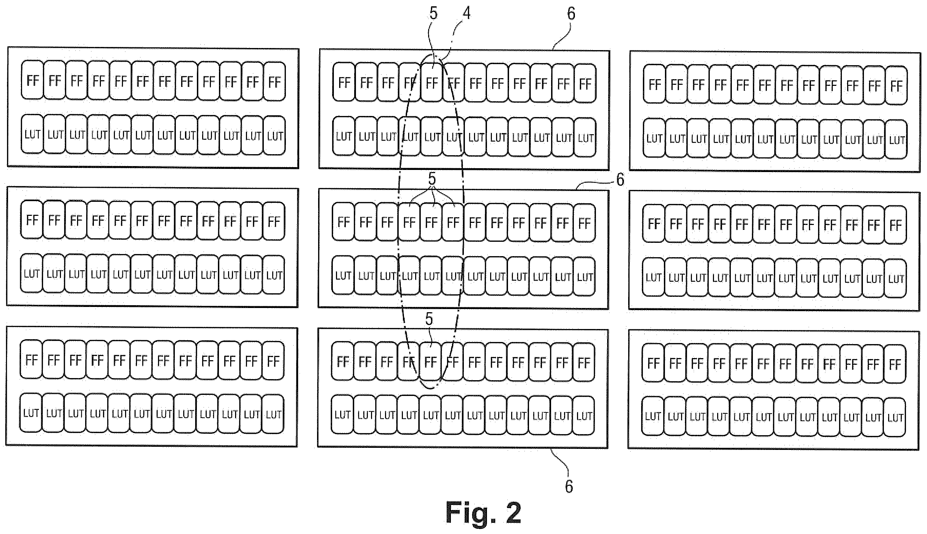

Ainsi, sur la figure 2, la forme géométrique 4 renferme un groupe de défaillance de cinq registres de référence défaillants 5 du FPGA de référence, qui sont situés dans trois groupes logiques 6 distincts.

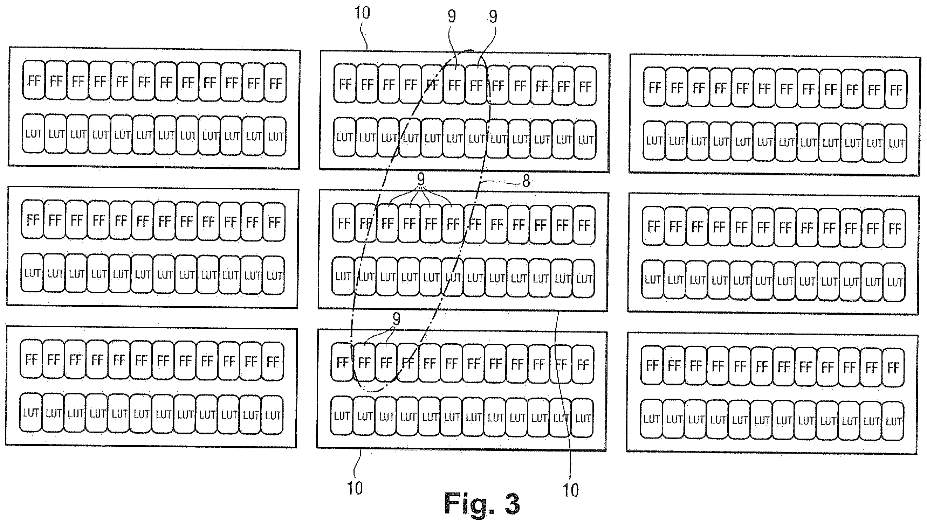

De même, sur la figure 3, la forme géométrique 8 renferme un groupe de défaillance de huit registres de référence défaillants 9 qui sont situés dans trois groupes logiques 10 distincts.

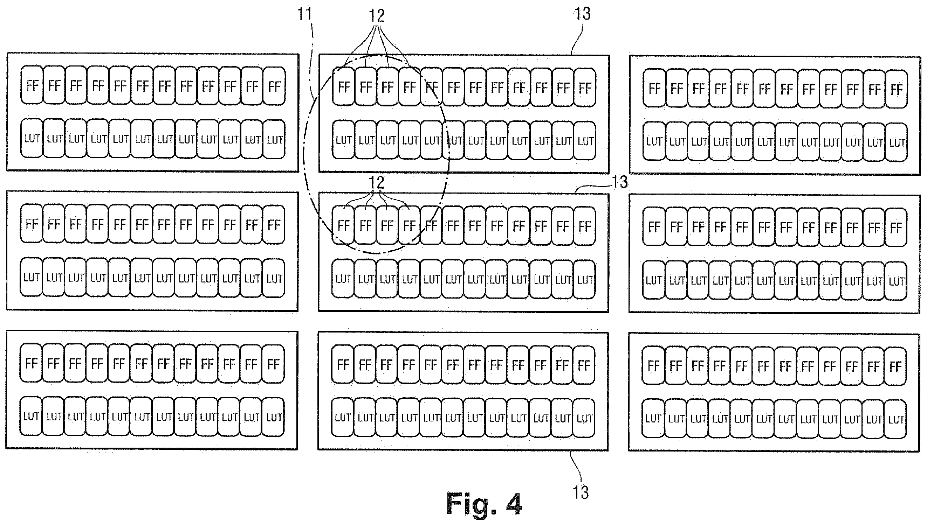

Sur la figure 4, la forme géométrique 11 renferme un groupe de défaillance de huit registres de référence défaillants 12 qui sont situés dans deux groupes logiques 13 distincts. Les registres de référence défaillants 12 peuvent être regroupés entre les deux lignes supérieures (correspondant aux deux groupes logiques 13), mais pas avec la ligne inférieure (correspondant au groupe logique situé sous les deux groupes logiques 13).

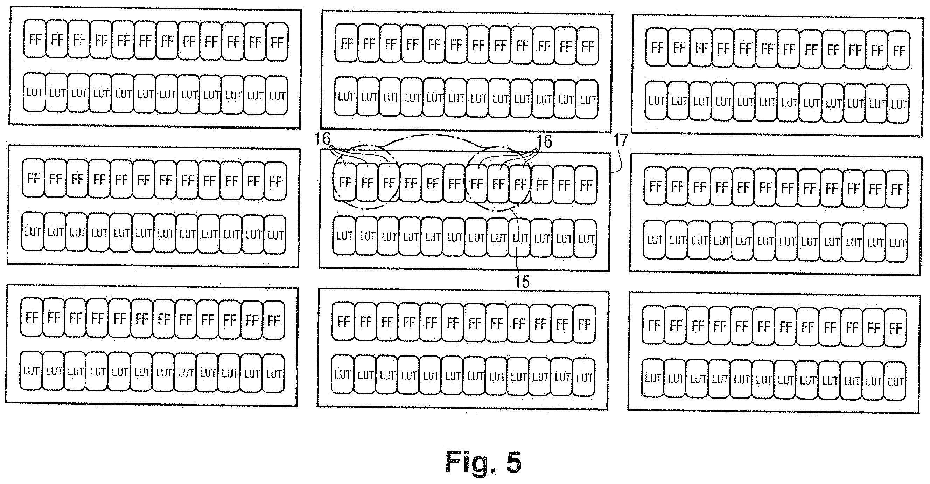

Sur la figure 5, la forme géométrique 15 renferme un groupe de défaillance de six registres de référence défaillants 16 qui sont situés dans un même groupe logique 17. Les six registres de référence défaillants 16 semblent être liés par des défaillances simultanées, alors que leurs positionnements logiques (c'est à dire au sein du groupe logique 17) ne sont pas adjacents.

Après un nombre suffisant d'opérations d'irradiations et de lectures, la cartographie permet d'évaluer statistiquement des défaillances simultanées autour d'un registre de référence particulier.

On estime, en cas de défaillance d'un élément de référence particulier du FPGA de référence, une probabilité de défaillance simultanée d'au moins un autre élément de référence en fonction des positions de l'élément de référence particulier et de l'autre élément de référence.

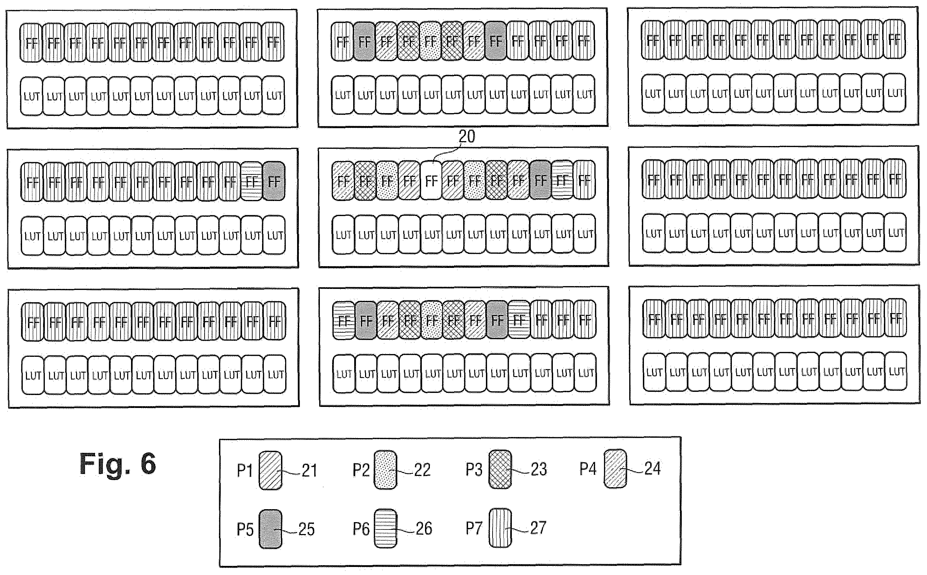

Cette étape est illustrée à l'aide des figures 6 à 9.

En référence à la figure 6, on définit une pluralité de motifs associés aux registres de référence pour évaluer la probabilité de défaillance simultanée. Pour un registre de référence défaillant particulier 20, chaque motif 21 à 27 illustre la probabilité de défaillance simultanée d'obtenir une défaillance d'un registre de référence associé audit motif 21 à 27. On nomme P1 la probabilité de défaillance simultanée associée au motif 21, P2 la probabilité de défaillance simultanée associée au motif 22, P3 la probabilité de défaillance simultanée associée au motif 23, P4 la probabilité de défaillance simultanée associée au motif 24, P5 la probabilité de défaillance simultanée associée au motif 25, P6 la probabilité de défaillance simultanée associée au motif 26, P7 la probabilité de défaillance simultanée associée au motif 27.

On a :

$$P1 \geq P2 \geq P3 \geq P4 \geq P5 \geq P6 \geq P7.$$

Ainsi, sur la figure 6, on observe une probabilité de défaillance simultanée qui croît avec la distance entre le registre de référence particulier 20 et un autre registre de référence.

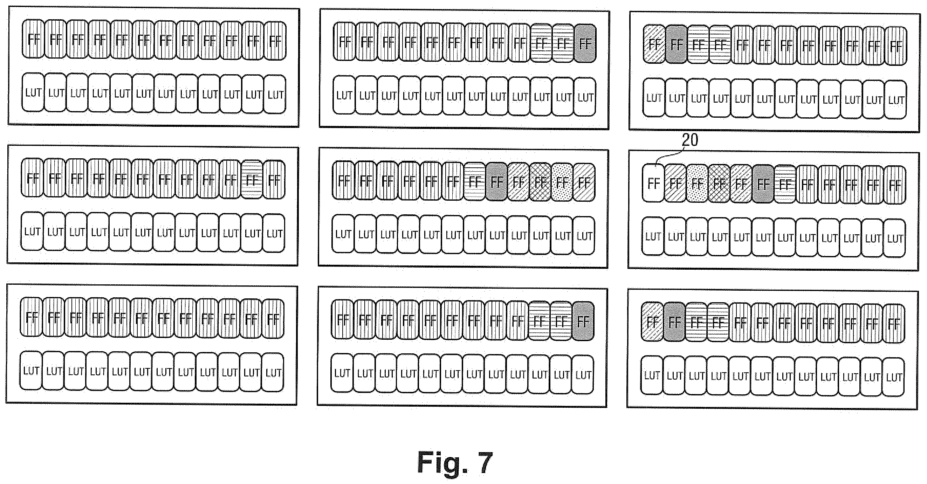

Sur la figure 7, on observe un cas de dissymétrie entre les directions verticale et horizontale. La probabilité de défaillance simultanée décroît beaucoup plus vite dans la direction verticale que dans la direction horizontale.

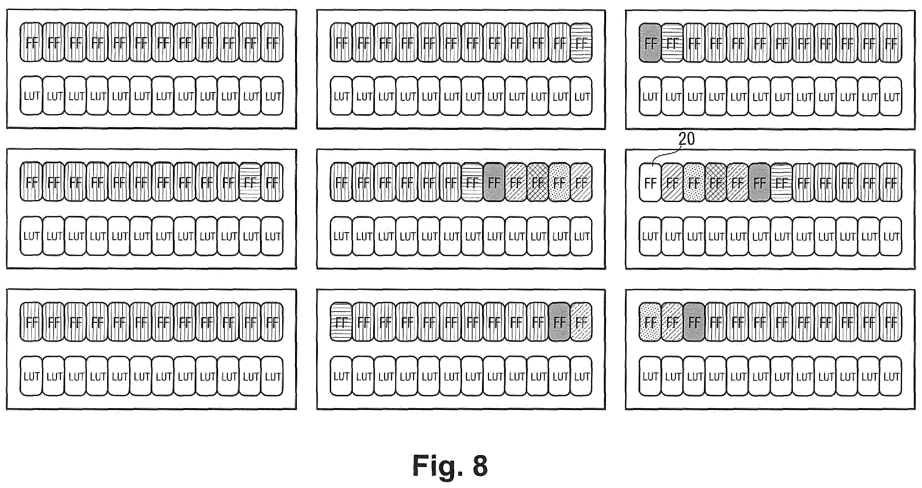

Sur la figure 8, on observe des dissymétries entre les lignes (ou groupes logiques) successives, ou entre les lignes « paire » et « impaire ». Ici, les registres de référence de la ligne centrale et de la ligne inférieures présentent des probabilités de défaillance simultanée plus importantes que ceux de la ligne centrale et de la ligne supérieure.

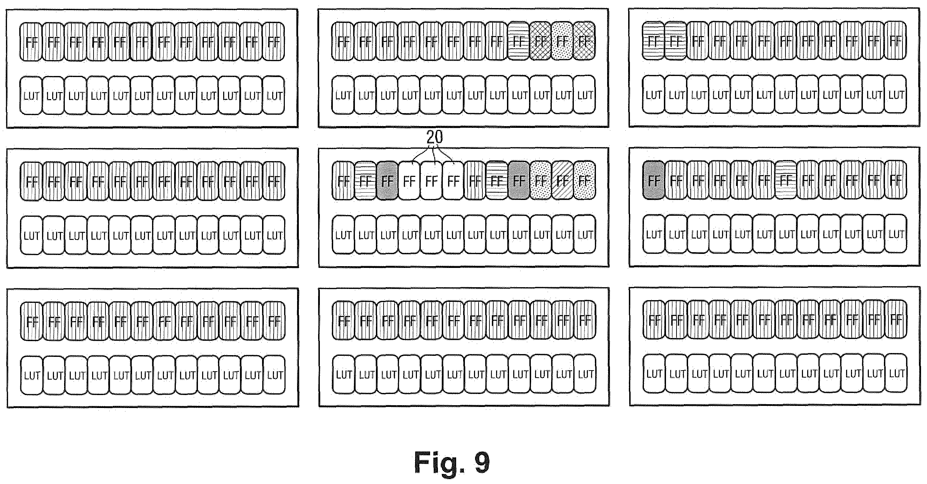

Sur la figure 9, on observe le cas d'une différence entre la structure géométrique « théorique » du FPGA de référence et sa structure géométrique « réelle ». La relation entre les probabilités de défaillance simultanée des registres de référence montre un regroupement des registres par neuf et non par douze (comme dans un groupe logique ou *cluster*).

A partir des résultats obtenus pendant la phase de caractérisation préliminaire, il est ainsi possible de calculer la probabilité que des registres de référence soient défaillants simultanément.

Ainsi, dans le cas d'une mise en œuvre de techniques de durcissement du FPGA, par exemple dans le cas de l'utilisation d'une redondance de type redondance triple modulaire, ou bien dans le cas de l'utilisation d'un codage correcteur d'erreur, on peut calculer la probabilité d'avoir une défaillance malgré les contre-mesures en place (c'est-à-dire une défaillance que la technique de durcissement ne saura pas corriger, ou ne saura pas détecter).

On peut donc évaluer la sensibilité résiduelle d'un FPGA de référence dans lequel une ou des techniques de durcissement sont mises en oeuvre.

Par exemple, pour chacun des trois registres de référence d'une même cellule TMR positionnés dans le composant FPGA, on utilise la cartographie pour connaître la probabilité que deux ou trois registres de référence soient défaillants en même temps (ce qui équivaut à une faute de l'ensemble « cellule TMR »).

Par exemple, dans le cas de l'utilisation d'un code correcteur d'erreur permettant de corriger une erreur sur un mot de trente-deux éléments, on utilise l'information de position de ces 32 éléments dans le FPGA ainsi que la cartographie pour connaître la probabilité que deux registres de référence ou plus soient défaillants simultanément dans le mot afin de connaître la probabilité de défaillance résultante.

Une fois ce calcul réalisé sur l'ensemble du FPGA de référence ou bien sur une fonction déterminée, une probabilité globale de défaillance est déduite.

Le procédé de production consiste alors à utiliser les résultats obtenus pendant la phase de caractérisation préliminaire, mise en oeuvre sur le FPGA de référence, pour produire un ou des FPGAs optimisés pour être protégé contre des radiations.

Le FPGA optimisé comporte une surface optimisée sur laquelle sont répartis des éléments optimisés sensibles aux radiations. Les éléments optimisés sensibles aux radiations sont des registres optimisés du FPGA optimisé. La position des registres optimisés, sur la surface optimisée du FPGA optimisée, correspond à la position des registres de référence sur la surface de référence du FPGA de référence.

Dans le cas où un objectif est donné sur la probabilité globale de défaillance du FPGA optimisé ou bien d'une fonction déterminée, le placement des registres optimisés est modifié afin de s'approcher de la valeur souhaitée.

Le procédé de production comporte ainsi, pour chaque FPGA optimisé produit, une phase d'optimisation comprenant l'étape d'adapter une programmation du FPGA optimisé en fonction de la cartographie mise en œuvre sur le FPGA de référence.

L'adaptation de la programmation comprend l'étape d'adapter une position sur la surface optimisée du FPGA optimisé d'au moins un registre optimisé.

On assure ainsi que deux registres optimisés du FPGA optimisé, qui coopèrent au sein d'une même fonction, ne présentent pas des positions correspondant à des positions de deux registres de référence du FPGA de référence appartenant à un même groupe de défaillance.

On programme le FPGA optimisé pour les besoins opérationnels.

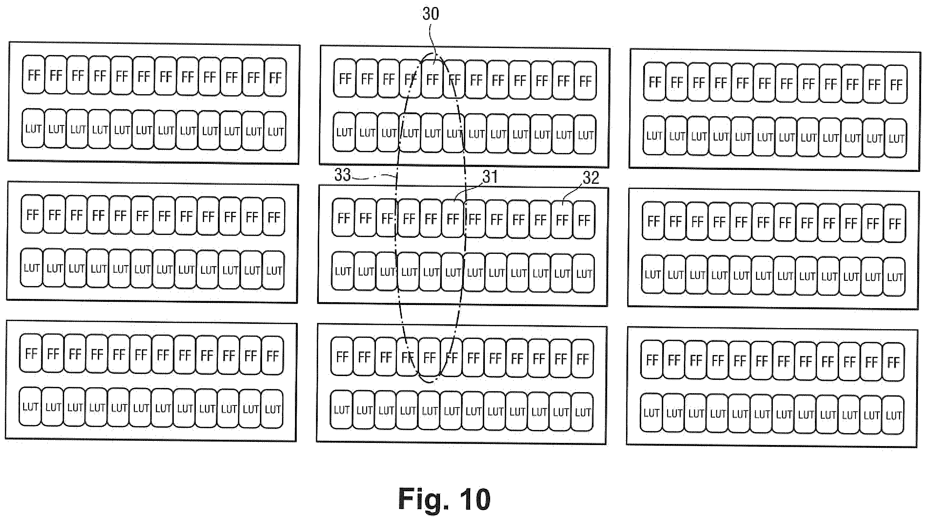

On illustre ce qui vient d'être dit par un premier exemple, en référence à la figure 10. Une cellule TMR d'un FPGA non optimisé comporte un premier registre 30, un deuxième registre 31 et un troisième registre 32. Le premier registre 30, le deuxième registre 31 et le troisième registre 32 coopèrent donc pour mettre en œuvre une même fonction qui est une fonction de durcissement visant à durcir le FPGA contre des radiations. La fonction de durcissement est une redondance triple modulaire.

Le premier registre 30 et le deuxième registre 31 présentent des positions correspondant à des positions de deux registres de référence du FPGA de référence appartenant à un même groupe de défaillance et inclus dans la forme géométrique 33, ce qui remet en cause l'efficacité de la protection.

On estime donc que, en cas de défaillance du premier registre 30, la probabilité de défaillance simultanée du deuxième registre 31 est élevée.

On adapte donc la position du premier registre et du deuxième registre en fonction de cette probabilité de défaillance simultanée élevée. La position du premier registre et du deuxième registre est adaptée de manière à ne pas avoir deux registres parmi le premier registre, le deuxième registre et le troisième registre appartenant à un même groupe de défaillance. On assure ainsi que chaque registre parmi le premier registre, le deuxième registre et le troisième registre soit défaillant de manière indépendante.

De même, lorsque la fonction de durcissement est un codage correcteur d'erreur, on s'assure que deux registres utilisés pour stocker des portions (bit) d'un même mot ne se trouvent pas dans un même groupe de défaillance.

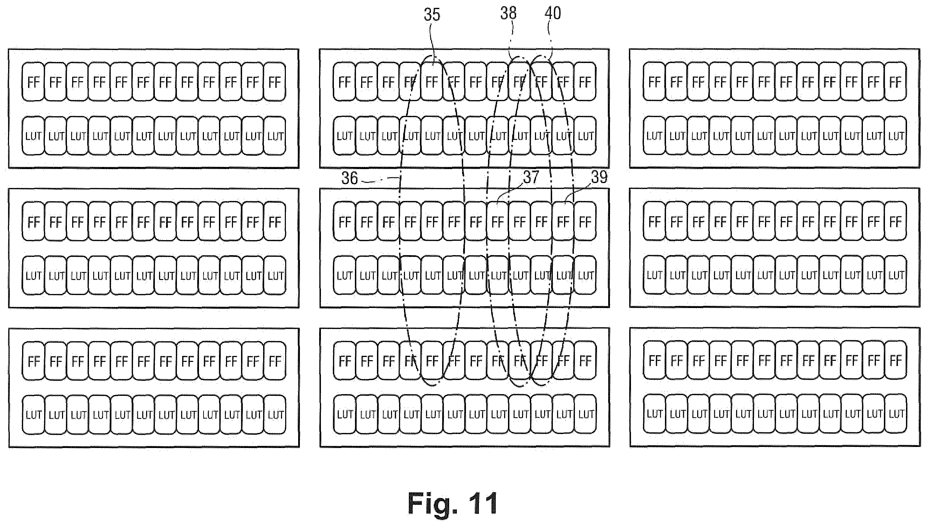

Ainsi, en référence à la figure 11, on obtient un FPGA optimisé ayant un premier registre optimisé 35 dont la position correspond à un registre de référence appartenant à un premier groupe de défaillance inclus dans la forme géométrique 36, un deuxième registre optimisé 37 dont la position correspond à un registre de référence appartenant à un deuxième groupe de défaillance inclus dans la forme géométrique 38, et un troisième registre optimisé 39 dont la position correspond à un registre de référence appartenant à un troisième groupe de défaillance inclus dans la forme géométrique 40. Le premier registre optimisé 35, le deuxième registre optimisé 37 et le troisième registre optimisé 39 ne peuvent donc pas tomber en panne simultanément sous l'effet d'une unique radiation, avec une probabilité connue et paramétrée par le seuil de probabilité de défaillance simultanée utilisé pour définir les groupes de défaillance.

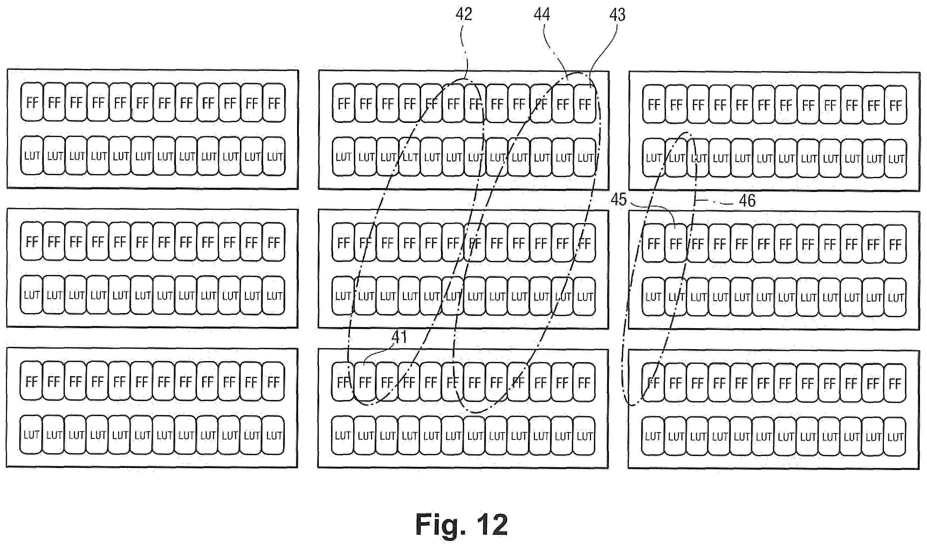

De même, en référence à la figure 12, on obtient un FPGA optimisé ayant un premier registre optimisé 41 dont la position correspond à un registre de référence appartenant à un premier groupe de défaillance inclus dans la forme géométrique 42, un deuxième registre optimisé 43 dont la position correspond à un registre de référence appartenant à un deuxième groupe de défaillance inclus dans la forme géométrique 44, et un troisième registre optimisé 45 dont la position correspond à un registre de référence appartenant à un troisième groupe de défaillance inclus dans la forme géométrique 46. Le premier registre optimisé 41, le deuxième registre optimisé 43 et le troisième registre optimisé 45 ne peuvent donc pas tomber en panne simultanément.

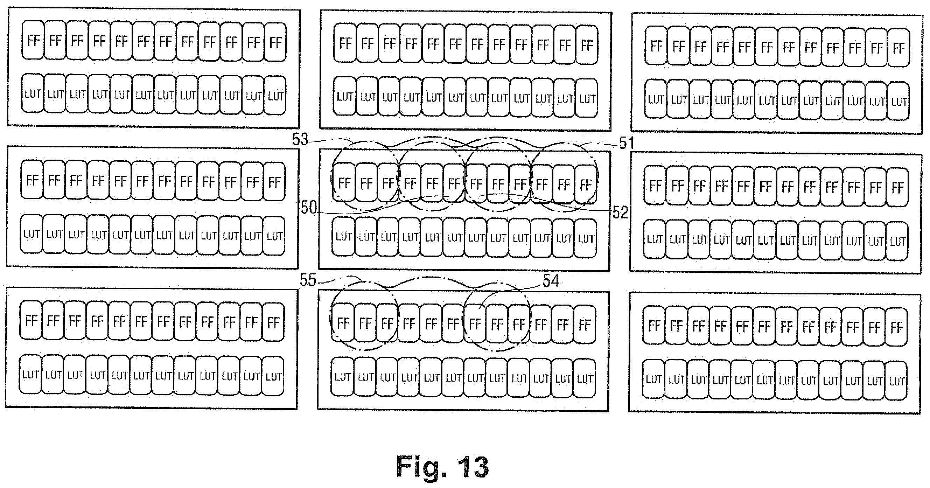

De même, en référence à la figure 13, on obtient un FPGA optimisé ayant un premier registre optimisé 50 dont la position correspond à un registre de référence appartenant à un premier groupe de défaillance inclus dans la forme géométrique 51, un deuxième registre optimisé 52 dont la position correspond à un registre de référence appartenant à un deuxième groupe de défaillance inclus dans la forme géométrique 53, et un troisième registre optimisé 54 dont la position correspond à un registre de référence appartenant à un troisième groupe de défaillance inclus dans la forme géométrique 55. Le premier registre optimisé 50, le deuxième registre optimisé 52 et le troisième registre optimisé 54 ne peuvent donc pas tomber en panne simultanément. Ici, on voit que, grâce à l'évaluation de la géométrie des défaillances, on peut coller virtuellement deux registres optimisés sensibles 50, 52 dans le placement, sans que ces registres optimisés soient proches d'un point de vue des défaillances aux radiations.

Pour adapter le positionnement des registres optimisés de la manière qui vient d'être décrite, il peut être nécessaire de modifier le placement effectué automatiquement par l'outil de placement routage utilisé.

Le placement des registres optimisés dans le circuit optimisé comprend ici deux étapes.

Une première étape consiste à réaliser un premier placement-routage automatique à l'aide d'un outil de placement-routage traditionnel. Le premier placement-routage est optimisé vis-à-vis des objectifs de performance de calcul et de consommation.

Une deuxième étape consiste à modifier ce premier placement-routage par la méthode qui vient d'être décrite afin d'obtenir un deuxième placement-routage optimisé vis-à-vis des objectifs de tenue aux rayonnements.

De cette façon, il est possible de trouver rapidement une solution satisfaisant l'ensemble des contraintes, à la fois fonctionnelles (performance de calcul, consommation) et liées à la tenue aux radiations.

Le deuxième placement-routage est mis en œuvre par un nouvel outil de placement-routage qui est agencé pour acquérir le premier placement routage, les résultats de la cartographie, et pour mettre en œuvre la phase d'optimisation du procédé de production selon l'invention.

Dans le FPGA de la famille *IGLOO2,* par exemple, on peut simplement appliquer des permutations entre les bascules d'un même groupe logique ou entre les bascules de deux groupes logiques différents afin d'espacer les éléments appartenant à une même cellule TMR. L'espacement des éléments appartenant à une même cellule TMR s'entend d'un espacement au sens de la cartographie des défaillances, et non pas simplement d'un espacement relatif à des coordonnées de placement.

On note que le procédé de production selon l'invention permet d'atteindre et de justifier des performances de tenue aux fautes qui ne pourraient être atteintes par un logiciel de placement automatique du commerce sur un composant ou une technologie commerciale non durcie. En effet, les outils de placement automatique du commerce répondent à des objectifs autres, notamment de consommation énergétique et de performance (fréquences de fonctionnement atteignables).

L'effort à fournir pour atteindre et justifier des performances de tenue aux fautes est moindre par rapport aux simulations complexes de l'état de l'art.

Toutefois, un programme informatique destiné à mettre en oeuvre le procédé de production selon l'invention pourrait être directement intégré dans de tels outils de placement du commerce, afin de permettre un durcissement automatique du design.

La capacité du procédé de production selon l'invention à démontrer ou mettre en évidence des groupements d'éléments sensibles de forme géométrique et répétitifs sur un composant commercial est également un atout précieux dans le cadre d'une démarche de robustesse.

Bien entendu, l'invention n'est pas limitée au mode de réalisation décrit mais englobe toute variante entrant dans le champ de l'invention telle que définie par les revendications.

Les FPGAs sont ici des FPGAs *IGLOO2,* mais un autre type de FPGA pourrait bien sûr être utilisé.

Le circuit de référence et le circuit optimisé ne sont pas forcément des FPGAs, mais pourraient par exemple être des ASICs programmables ou non, ou d'autres circuits logiques programmables ou non.

Dans le cas d'un ASIC, c'est directement en concevant l'ASIC que l'on peut intervenir sur la position des éléments sensibles. Dans ce cas, un véhicule de test serait un test-chip avec un placement dense des éléments sensibles, tandis que le composant optimisé serait le design opérationnel dont le placement tient compte des résultats de mesure sur le *test chip.*

Le circuit de référence et le circuit optimisé ne sont pas nécessairement des circuits logiques, et peuvent aussi être des circuits analogiques quelconques.

On pourrait avoir non pas une mais plusieurs surfaces de référence, et non pas une mais plusieurs surfaces optimisées : c'est notamment le cas pour les circuits composés de multiples « *dies* » empilés ou de multiples « *dies* » interconnectés dans un même boitier

Le circuit de référence n'est pas nécessairement identique au circuit optimisé avant son optimisation : le circuit de référence peut par exemple être un circuit de la même famille, ou bien présentant une même architecture et utilisant une technologie de fabrication identique ou similaire en termes de matériaux utilisés et de géométries produites.

Les éléments sensibles aux radiations ne sont pas nécessairement des registres formés chacun par une bascule. Les éléments sensibles pourraient être des registres formés par plusieurs bascules, ou bien d'autres éléments comme des éléments logiques, des points mémoire volatile ou non, des émetteurs de lumière (Diode Electro Luminescente), des récepteurs de lumière (photodiode) ou à bas niveau les transistors d'un circuit numérique ou analogique. Les éléments sensibles peuvent également correspondre à des éléments plus complexes comme par exemple les neurones d'un réseau de neurone sur puce, des cœurs de calcul sur un processeur graphique *GPU*, des coeurs de processeur sur un système massivement parallèle « *many-core* ».

On note que le procédé de production selon l'invention peut être mis en œuvre dans un contexte de production en série, pour produire une quantité potentiellement importante de circuits optimisés. Le procédé de production peut aussi être mis en oeuvre pour produire un nombre réduit de circuits optimisés, par exemple à des fins expérimentales.

**Revendications**

1. Procédé de production d'un circuit optimisé pour être protégé contre des radiations, le procédé de production comportant une phase de caractérisation préliminaire mise en œuvre sur un circuit de référence qui comprend au moins une surface de référence sur laquelle sont répartis des éléments de référence (5, 9, 12, 16, 20) sensibles aux radiations, la phase de caractérisation préliminaire comprenant les étapes de :

   - irradier à plusieurs reprises le circuit de référence ;
   - après chaque irradiation, si un ou plusieurs éléments de référence du circuit de référence sont défaillants, localiser ledit ou lesdits éléments de référence ;
   - cartographier un impact des irradiations sur la surface de référence du circuit de référence ;

   le procédé de production comportant de plus une phase d'optimisation comprenant l'étape d'adapter une position sur au moins une surface optimisée du circuit optimisé d'au moins un élément optimisé (35, 37, 39) sensible aux radiations en fonction de la cartographie mise en œuvre sur le circuit de référence.

2. Procédé de production selon la revendication 1, dans lequel la cartographie comprend l'étape d'estimer, en cas de défaillance d'un élément de référence particulier du circuit de référence, une probabilité de défaillance simultanée d'au moins un autre élément de référence en fonction des positions de l'élément de référence particulier et de l'autre élément de référence.

3. Procédé de production selon l'une des revendications précédentes, dans lequel la cartographie comprend l'étape de définir au moins un groupe de défaillance comprenant une pluralité d'éléments de référence du circuit de référence, le groupe de défaillance étant tel qu'une probabilité de défaillance simultanée d'au moins deux éléments de référence du groupe de défaillance est supérieure à un seuil prédéterminé.

4. Procédé de production selon la revendication 3, dans lequel la phase d'optimisation comprend l'étape d'assurer que deux éléments optimisés du circuit optimisé, qui coopèrent au sein d'une même fonction, ne présentent pas des positions correspondant à des positions de deux éléments de référence du circuit de référence appartenant à un même groupe de défaillance

5. Procédé de production selon la revendication 4, dans lequel la fonction est une fonction de durcissement visant à durcir le circuit optimisé contre les radiations.

6. Procédé de production selon la revendication 5, dans lequel la fonction de durcissement est une redondance triple modulaire.

7. Procédé de production selon la revendication 5, dans lequel la fonction de durcissement est un codage correcteur d'erreur.

8. Procédé de production selon l'une des revendications précédentes, dans lequel chaque élément de référence est un registre de référence formé par une ou plusieurs bascules, la phase de caractérisation préliminaire comprenant l'étape, réalisée préalablement aux irradiations, de remplir chaque registre de référence du circuit de référence avec une donnée connue, l'identification d'un registre de référence défaillant consistant à détecter un registre de référence contenant une donnée différente de la donnée connue.

9. Circuit optimisé comprenant des éléments optimisés agencés pour mettre en œuvre une pluralité de fonctions, le circuit optimisé étant tel que, pour chaque fonction, deux éléments optimisés coopérant au sein de ladite fonction sont positionnés selon des positions qui correspondent à des positions de deux éléments de référence du circuit de référence appartenant à des groupes de défaillance distincts, lesdits groupes de défaillance étant définis par le procédé de production selon la revendication 3.

10. Circuit optimisé selon la revendication 9, le circuit optimisé étant un FPGA ou un ASIC.

11. Circuit optimisé selon la revendication 9, le circuit optimisé étant un circuit analogique.

12. Carte électrique comportant un circuit optimisé selon l'une des revendications 9 à 11.

13. Unité de Mesure Inertielle comportant une carte électrique selon la revendication 12.

14. Système de navigation comprenant une Unité de Mesure Inertielle selon la revendication 13.

15. Outil de placement-routage agencé pour acquérir un premier placement-routage ainsi que des résultats de la cartographie mise en oeuvre dans le procédé de production selon l'une des revendications 1 à 8, l'outil de placement-routage étant en outre agencé pour mettre en oeuvre sur le premier placement-routage la phase d'optimisation du procédé de production selon l'une des revendications précédentes, de manière à obtenir un deuxième placement-routage.

16. Outil de placement-routage selon la revendication 15, l'outil de placement-routage étant agencé pour mettre en œuvre un placement-routage d'un FPGA.

17. Outil de placement-routage selon la revendication 15, l'outil de placement-routage étant agencé pour mettre en œuvre un placement-routage d'un ASIC.


**Patentansprüche**

1. Verfahren zur Herstellung einer Schaltung, die optimiert ist, um vor Strahlungen geschützt zu sein, wobei das Herstellungsverfahren eine Phase der Vorcharakterisierung umfasst, die an einer Referenzschaltung durchgeführt wird, die mindestens eine Referenzoberfläche umfasst, auf der strahlungsempfindliche Referenzelemente (5, 9, 12, 16, 20) verteilt sind, wobei die Phase der Vorcharakterisierung die Schritte umfasst:

   - mehrfaches Bestrahlen der Referenzschaltung;
   - nach jeder Bestrahlung, wenn ein oder mehrere Referenzelemente der Referenzschaltung ausgefallen sind, Lokalisieren des oder der genannten Referenzelemente;
   - Kartographieren einer Auswirkung der Strahlungen auf die Referenzoberfläche der Referenzschaltung;

   wobei das Herstellungsverfahren ferner eine Optimierungsphase umfasst, die den Schritt des Anpassens einer Position mindestens eines optimierten strahlungsempfindlichen Elements (35, 37, 39) auf mindestens einer optimierten Oberfläche der optimierten Schaltung in Abhängigkeit von der Kartographie umfasst, die an der Referenzschaltung durchgeführt wurde.

2. Herstellungsverfahren nach Anspruch 1, bei dem im Falle des Ausfalls eines besonderen Referenzelements der Referenzschaltung die Kartographie den Schritt des Schätzens einer Wahrscheinlichkeit eines gleichzeitigen Ausfalls mindestens eines weiteren Referenzelements in Abhängigkeit von den Positionen des besonderen Referenzelements und des weiteren Referenzelements umfasst.

3. Herstellungsverfahren nach einem der vorhergehenden Ansprüche, bei dem die Kartographie den Schritt des Definierens mindestens einer Ausfallgruppe umfasst, die eine Vielzahl von Referenzelementen der Referenzschaltung umfasst, wobei die Ausfallgruppe derart ist, dass eine Wahrscheinlichkeit eines gleichzeitigen Ausfalls von mindestens zwei Referenzelementen der Ausfallgruppe höher als ein vorbestimmter Schwellenwert ist.

4. Herstellungsverfahren nach Anspruch 3, bei dem die Optimierungsphase den Schritt umfasst, dass sichergestellt wird, dass zwei optimierte Elemente der optimierten Schaltung, die innerhalb einer selben Funktion zusammenwirken, keine Positionen aufweisen, die den Positionen von zwei Referenzelementen der Referenzschaltung entsprechen, die zu einer selben Ausfallgruppe gehören.

5. Herstellungsverfahren nach Anspruch 4, bei dem die Funktion eine Härtungsfunktion ist, die darauf abzielt, die optimierte Schaltung gegen Strahlungen zu härten.

6. Herstellungsverfahren nach Anspruch 5, bei dem die Härtungsfunktion eine dreifache modulare Redundanz ist.

7. Herstellungsverfahren nach Anspruch 5, bei dem die Härtungsfunktion eine Fehlerkorrekturkodierung ist.

8. Herstellungsverfahren nach einem der vorhergehenden Ansprüche, bei dem jedes Referenzelement ein Referenzregister ist, das aus einem oder mehrere Kippschaltungen gebildet ist, wobei die Phase der Vorcharakterisierung den Schritt, durchgeführt vor den Bestrahlungen, des Befüllens jedes Referenzregisters der Referenzschaltung mit einem bekannten Datenelement umfasst, wobei die Identifikation eines ausgefallenen Referenzregisters darin besteht, ein Referenzregister zu detektieren, das ein von dem bekannten Datenelement verschiedenes Datenelement enthält.

9. Optimierte Schaltung, umfassend optimierte Elemente, die ausgebildet sind, eine Vielzahl von Funktionen durchzuführen, wobei die optimierte Schaltung derart ist, dass, für jede Funktion, zwei optimierte Elemente, die innerhalb der genannten Funktion zusammenwirken, gemäß Positionen positioniert sind, die den Positionen von zwei Referenzelementen der Referenzschaltung entsprechen, die zu verschiedenen Ausfallgruppen gehören, wobei die genannten Ausfallgruppen durch das Herstellungsverfahren nach Anspruch 3 definiert sind.

10. Optimierte Schaltung nach Anspruch 9, wobei die optimierte Schaltung ein FPGA oder ein ASIC ist.

11. Optimierte Schaltung nach Anspruch 9, wobei die optimierte Schaltung eine analoge Schaltung ist.

12. Elektrische Karte, die eine optimierte Schaltung nach einem der Ansprüche 9 bis 11 umfasst.

13. Inertiale Messeinheit, die eine elektrische Karte nach Anspruch 12 umfasst.

14. Navigationssystem, umfassend eine inertiale Messeinheit nach Anspruch 13.

15. Platzierungs- und Routing-Werkzeug, das ausgebildet ist, um einen ersten Platzierungs- und Routing-Vorgang sowie Ergebnisse der Kartographie, die in dem Herstellungsverfahren nach einem der Ansprüche 1 bis 8 durchgeführt wird, zu erfassen, wobei das Platzierungs- und Routing-Werkzeug ferner ausgebildet ist, bei dem ersten Platzierungs- und Routing-Vorgang die Optimierungsphase des Herstellungsverfahrens nach einem der vorhergehenden Ansprüche durchzuführen, um einen zweiten Platzierungs- und Routing-Vorgang zu erhalten.

16. Platzierungs- und Routing-Werkzeug nach Anspruch 15, wobei das Platzierungs- und Routing-Werkzeug ausgebildet ist, einen Platzierungs- und Routing-Vorgang eines FPGA durchzuführen.

17. Platzierungs- und Routing-Werkzeug nach Anspruch 15, wobei das Platzierungs- und Routing-Werkzeug ausgebildet ist, einen Platzierungs- und Routing-Vorgang eines ASIC durchzuführen.

**Claims**

1. A production method for producing a circuit optimized to be protected against radiation, the production method including a preliminary characterization stage performed on a reference circuit comprising at least one reference surface on which radiation-sensitive reference elements (5, 9, 12, 16, 20) are distributed, the preliminary characterization stage comprising the steps of:

· irradiating the reference circuit a plurality of times;
· after each irradiation, if one or more reference elements of the reference circuit have failed, locating said reference element(s); and
· mapping the impact of the irradiations on the reference surface of the reference circuit;
· the production method further including an optimization stage comprising the step of adapting the position of at least one optimized radiation-sensitive element (35, 37, 39) on at least one optimized surface of the optimized circuit as a function of the mapping performed on the reference circuit.

2. A production method according to claim 1, wherein in the event of a particular reference element of the reference circuit failing, the mapping comprises the step of estimating the probability of at least one other reference element failing simultaneously as a function of the positions of the particular reference element and of the other reference element.

3. A production method according to either preceding claim, wherein the mapping comprises the step of defining at least one failure group comprising a plurality of reference elements of the reference circuit, the failure group being such that the probability of simultaneous failure of at least two reference elements of the failure group is greater than a predetermined threshold.

4. A production method according to claim 3, wherein the optimization stage comprises the step of ensuring that two optimized elements of the optimized circuit that cooperate within a common function do not present positions corresponding to the positions of two reference elements of the reference circuit that belong to the same failure group.

5. A production method according to claim 4, wherein the function is a hardening function seeking to harden the optimized circuit against radiation.

6. A production method according to claim 5, wherein the hardening function is triple modular redundancy.

7. A production method according to claim 5, wherein the hardening function is error correction coding.

8. A production method according to any preceding claim, wherein each reference element is a reference register made up of one or more bistables, the preliminary characterization stage including the step, performed prior to the irradiations, of filling each reference register of the reference circuit with known data, a failed reference register being identified by detecting a reference register that contains data different from the known data.

9. An optimized circuit comprising optimized elements arranged to perform a plurality of functions, the optimized circuit being such that, for each function, two optimized elements co-operating within said function are positioned in positions that correspond to the positions of two reference elements of the reference circuit that belong to different failure groups, said failure groups being defined by the production method according to claim 3.

10. An optimized circuit according to claim 9, the optimized circuit being an FPGA or an ASIC.

11. An optimized circuit according to claim 9, the optimized circuit being an analog circuit.

12. An electric circuit card including an optimized circuit according to any one of claims 9 to 11.

13. An inertial measurement unit including an electric circuit card according to claim 12.

14. A navigation system comprising an inertial measurement unit according to claim 13.

15. A placement and routing tool arranged to acquire a first placement and routing and also the results of the mapping performed in the production method according to any one of claims 1 to 8, the placement and routing tool also being arranged to perform on the first placement and routing the optimization stage of the production method according to any preceding claim, so as to obtain a second placement and routing.

16. A placement and routing tool according to claim 15, the placement and routing tool being arranged to perform placement and routing of an FPGA.

17. A placement and routing tool according to claim 15, the placement and routing tool being arranged to perform placement and routing of an ASIC.

Fig. 1

Fig. 2

Fig. 3

**Fig. 4**

**Fig. 5**

**Fig. 6**

Fig. 7

Fig. 8

**Fig. 9**

**Fig. 10**

Fig. 11

Fig. 12

Fig. 13

**EP 3 811 093 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2012180005 A1